# EUROPÄISCHE PATENTSCHRIFT

(11) **EP 1 715 291 B1**
(45) Veröffentlichungstag und Bekanntmachung des Hinweises auf die Patenterteilung: **20.04.2011**
(21) Anmeldenummer: 06006512.5
(22) Anmeldetag: 29.03.2006
(51) Int. Cl.: G01B 11/25

(54) **Projektor für eine Anordnung zum dreidimensionalen optischen Vermessen von Objekten**
Projector for a system for three dimensional optical object measurement
Projecteur pour un dispositif de mesure optique d'objets en trois dimensions

(30) Priorität: 21.04.2005 DE 102005018656
(43) Veröffentlichungstag der Anmeldung: 25.10.2006
(73) Patentinhaber: GOM Gesellschaft für optische Meßtechnik mbH, 38106 Braunschweig (DE)
(72) Erfinder: Gomercic, Mladen, Dr., 38102 Braunschweig (DE); Winter, Detlef, Dr., 38533 Vordorf (DE)
(74) Vertreter: Gerstein, Hans Joachim

(56) Entgegenhaltungen:
- DE-A1- 4 007 502
- JP-A- 2003 042 736
- US-A- 4 212 073

## Beschreibung

Die Erfindung betrifft einen Projektor für eine Anordnung zum dreidimensionalen optischen Vermessen von Objekten mit einem topometrischen Messverfahren, bei dem Bilder von auf ein Objekt projizierten Projektionsmustern aufgenonimen und ausgewertet werden, wobei der Projektor eine Beleuchtungseinheit und einen mit Projektionsmustern versehenen Träger zur Projektion der Lichtstrukturen hat.

Die dreidimensionale optische Erfassung von Objektoberflächen mittels optischer Triangulationssensoren, nach dem Prinzip der Topometrie, auch Streifenprojektion genannt, ist hinreichend bekannt. Hierbei werden unterschiedliche Streifenmuster auf das zu vermessende Objekt projiziert, von einer oder mehreren Kameras beobachtet und anschließend rechnergestützt ausgewertet.

Die Grundlagen und praktischen Anwendungen solcher topometrischer Messverfahren werden beispielsweise in Bernd Breuckmann: "Bildverarbeitung und optische Messtechnik in der industriellen Praxis", 1993, Franzis-Verlag GmbH, München ausführlich beschrieben.

In Reinhard W. Malz: "Codierte Lichtstrukturen für 3-D-Meßtechnik und Inspektion", Berichte aus dem Institut für Technische Optik der Universität Stuttgart, Januar 1992, werden verschiedene Vorrichtungen beschrieben, mit denen derartige Messaufbauten realisiert werden können.

Eine technische Umsetzung ist z.B. aus der DE 44 15 834 C2 bekannt, bei welcher die projizierten Lichtstrukturen mittels einer Mehrzahl von phasenrichtig auf einem Träger angeordneten Projektionsgittern erzeugt werden, die nacheinander durch lineare Verschiebung des Trägers zur Projektion gelangen.

Weiterhin ist aus der EP 0 379 079 B2 ein Träger für mehrere nebeneinander angeordnete lineare parallele Strichgitter beschrieben, wobei der Träger definiert verschiebbar ist.

Aus DE 197 43 811 A1 ist eine Anordnung bekannt, bei der spiralförmige Streifen auf einer Kreisscheibe angeordnet sind.

In US 4 871 256 wird ebenfalls von einer Kreisscheibe ausgegangen, wobei es sich hier um kreisförmige Streifen handelt. Das Zentrum der kreisförmigen Streifen befindet sich im Drehpunkt der Scheibe

Gemeinsam haben diese Schriften, dass es sich bei den Mustern auf den Trägern um Streifen handelt. Diese Streifen können mit einem bekanriten Verfahren der Belichtung einer mit einer Metallschicht beschichteten Glasplatte erzeugt werden. Durch dieses Verfahren lassen sich sowohl Gitterstrukturen mit hoher Liniendichte, als aber auch mit Hilfe des Ditterings-Verfahrens zum Beispiel sinusförmige Helligkeitsverläufe erzeugen.

Beim Dittering-Verfahren wird beispielsweise eine sinusförmige Helligkeitsverteilung des Projektionsgitters, durch die Zusammensetzung jeder einzelnen Gitterlinie aus einer Vielzahl unterschiedlich breiter feiner Linien angenähert.

DE 40 07 502 A1 offenbart ein Verfahren und eine Vorrichtung zur berührungslosen Vermessung von Objektoberflächen. Auf das zu vermessende Objekt werden nacheinander durch mindestens zwei im Winkel zueinander angeordnete Projektoren zwei Streifenmuster projiziert, wobei die Periode der Gitter in den Projektoren gleich ist. Die Streifenmuster werden von einer Kamera aufgenommen und die Streifenphase der beiden Projektionen wird für jeden Bildpunkt bestimmt, um dann die Differenzen der Streifenphasen der beiden Projektionen für die Bildpunkte zu berechnen. Auch bei Bewegung der Projektoren relativ zur Kamera, sind diese Differenzen ortsfest und werden über eine Vielzahl von Videobildern in einem Bildspeicher aufsummiert.

Aufgabe der Erfindung ist es, einen verbesserten Projektor zu schaffen, mit dem bei gleich bleibender Messqualität einfachere Strukturen auf dem Träger eine kostengünstigere Herstellung gewährleisten. Außerdem soll eine sehr hohe Messgeschwindigkeit erreicht werden.

Die Aufgabe wird mit dem Projektor der eingangs erwähnten Art dadurch gelöst, dass auf dem Träger Projektionsmuster in Form sich wiederholender geometrischer Einzelstrukturen angeordnet sind, und der Träger mit den Projektionsmustern derart beweglich angeordnet ist, dass während der Bewegung und Beleuchtung ausgewählte Bereiche des Projektionsmusters in den Strahlengang zwischen Beleuchtungseinheit und Objekt verschoben werden und auf dem Objekt durch die Bewegungsunschärfe ein streifenförmiges Muster abgebildet wird.

Bei dem erfindungsgemäßen Projektor werden im Gegensatz zu dem Dittering-Verfahren Projektionsmuster auf einem Träger verwendet, die sich selbst wieder aus sich wiederholenden untereinander angeordneten gefüllten Einzelstrukturen, wie zum Beispiel Dreiecke, Kreise, Rauten oder Sinusse zusammensetzen.

Der Träger ist dabei so im Projektor montiert, dass er während der Beleuchtungszeit eine Bewegung durchführt, die dazu führt, dass eine Vielzahl von Einzelstrukturen das Projektionsfenster durchlaufen.

Der Projektor ist dabei so durch Auswahl der Größe der Strukturen und der Bewegungsgeschwindigkeit eingerichtet, dass im Kamerabild durch die Bewegungsunschärfe Streifenmuster entstehen. Hierzu muss auch die Belichtungszeit der Kamera entsprechend angepasst sein. Es werden jeweils so viele Einzelstrukturen hintereinander angeordnet, dass sich das auf das Objekt projizierte und aufgenommene Bild während der Belichtungszeit nicht verändert, wenn sich der Träger bewegt.
Sollen die Streifen verschoben oder ihre Breite verändert werden, so werden auf dem Träger unterschiedliche Bereiche appliziert, in denen die Einzelstrukturen veränderte Positionen bzw. veränderte Breiten haben.

Bei der Ausführung des Verfahrens ist somit nur sicherzustellen, dass die Belichtung bzw. Bildaufnahme mit dem gewünschten Projektionsmuster synchronisiert ist. Die Verschiebegeschwindigkeit des Trägers selbst hat keinen Einfluss auf die Messgenauigkeit.

Beim Stillstand des Trägers ist als Projektionsmuster zum Beispiel eine Vielzahl von Einzelstrukturen erkennbar. Diese Strukturen sind im Stillstand für eine Messung nach dem Streifenprojektionsprinzip unbrauchbar. Erst durch die Bewegung der Muster während der Aufnahme entstehen die erforderlichen Streifen durch Bewegungsunschärfe.

Durch die Erfindung können erwühschte Intensitätsverteilung der Streifen durch entsprechende Anpassung der Einzelstrukturen sehr einfach erstellt werden. Es müssen nicht so feine und teure Strukturen erzeugt werden, wie beim bekannten Ditteringsverfahren. Zudem muss die Trägerbewegung während der Messung nicht gestoppt werden. Hierdurch sind kurze Messzeiten möglich.

Der Träger kann derart beweglich in dem Projektor angeordnet sein, dass eine lineare Verschiebung des Trägers erfolgt. Die Projektionsmusters sind dann entsprechend linear ausgerichtet.

In einer alternativen Ausführungsform ist der Träger derart beweglich in dem Projektor angeordnet, dass eine Rotationsbewegung des Trägers erfolgt. Die Projektionsmusters sind dann entsprechend kreisförmig ausgerichtet. Dies hat den Vorteil, dass eine unterbrechungsfreie Vermessung ohne Stillstandszeiten möglich ist.

Zur Synchronisation des Projektors ist es besonders vorteilhaft, wenn Markierungen auf dem Träger zur Triggerung der Beleuchtungseinheit und/oder mindestens einer Beobachtungskamera so angeordnet sind, dass eine Beleuchtung und/oder Aufnahme erfolgt, wenn ein einer Markierung zugeordnetes Projektionsmuster in dem Strahlengang zwischen Beleuchtungseinheit und Objekt ausgerichtet ist.

Es kann auch ein mit dem Bewegungsmotor des Projektionsträgers gekoppelter Encoder zur Triggerung der Beleuchtungseinheit und/oder Beobachtungskamera vorgesehen sein, so dass eine Beleuchtung und/oder Aufnahme erfolgt, wenn das entsprechende Projektionsmuster in dem Strahlengang zwischen Beleuchtungseinheit und Objekt ausgerichtet ist.

Zur Automatisierung und Erzielung kurzer Messzeiten ist es vorteilhaft, wenn die Bewegung des Trägers kontinuierlich erfolgt.

Für die Form der Projektionsmuster sind verschiedene Varianten einzeln oder in Kombination denkbar. Vorteilhaft ist, wenn die Projektionsmuster eine Vielzahl sinusähnlicher Kurvenverläufe mit dunkel eingefärbten Flächen unterhalb der Sinusbögen, eine Vielzahl gaußförmiger Kurvenverläufe mit dunkel eingefärbten Flächen unterhalb der Gaußglocken, eine Vielzahl parabelartiger Kurvenverläufe mit dunkel eingefärbten Flächen unterhalb der Parabelstücke, eine Vielzahl zackenförmiger Kurvenverläufe mit dunkel eingefärbten Flächen unterhalb der Zacken, eine Vielzahl gefüllter aneinander gereihter Kreise, eine Vielzahl gefüllter aneinander gereihter Ellipsen, eine Vielzahl gefüllter aneinander gereihter Rauten, eine Vielzahl gefüllter aneinander gereihter Dreiecke und/oder eine Vielzahl gefüllter aneinander gereihter Vielecke aufweisen.

Die Erfindung wird nachfolgend anhand der beigefügten Zeichnungen beispielhaft näher erläutert. Es zeigen:
- Figur 1 -: Seitenansicht einer Ausführungsform des Projektors mit linearer Trägerverschiebung;
- Figur 2 -: Ausschnitt eines Projektionsmusters mit schematischer Darstellung eines mit Hilfe des bekannten Ditteringsverfahrens erzeugten Musters mit sinusförmigem Helligkeitsverlauf;
- Figur 3 a -: Projektion eines Projektionsmusters mit sinusförmigem Musterverlauf bei Stillstand des Trägers;

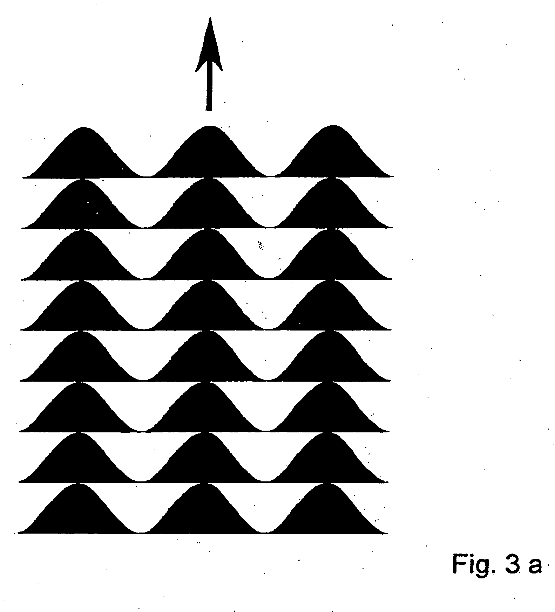

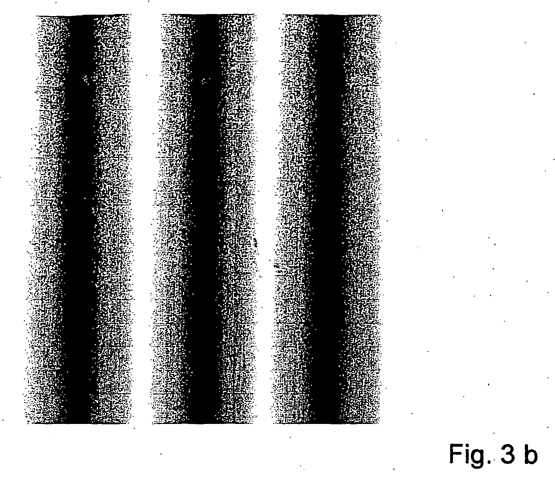

- Figur 3 b -: Projektion des Projektionsmusters aus Figur 3 a bei Bewegung des Trägers;

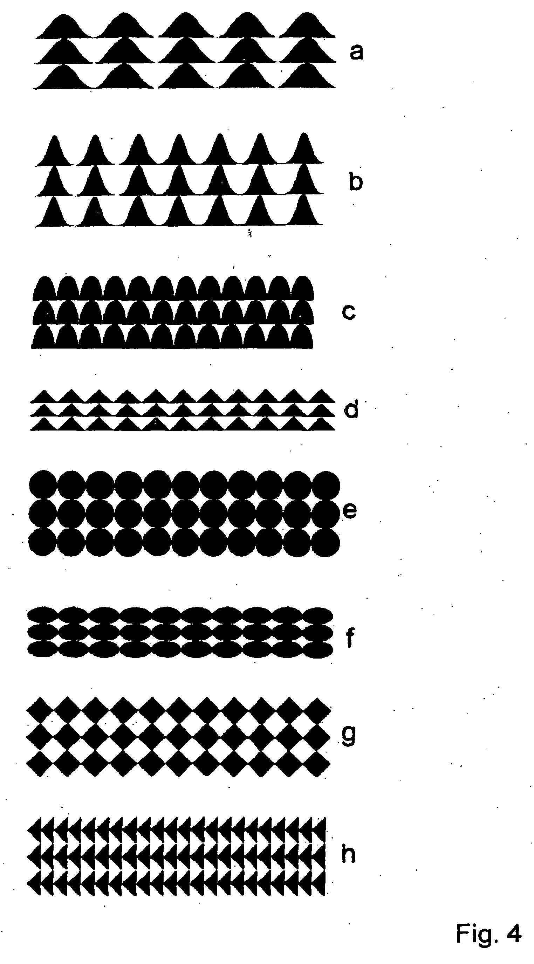

- Figur 4 -: Darstellung einer beispielhaften Auswahl möglicher Projektionsmuster;

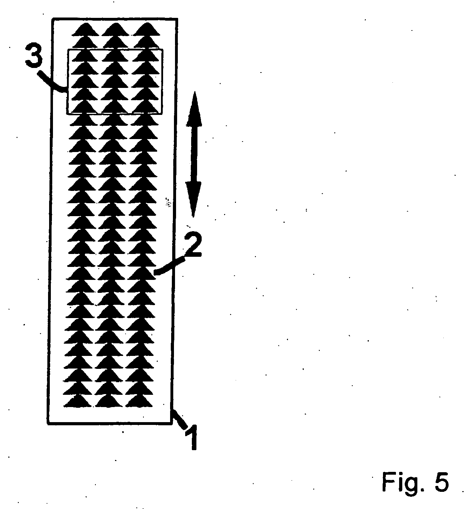

- Figur 5 -: Draufsicht auf eine lineare Ausführungsform des Trägers;

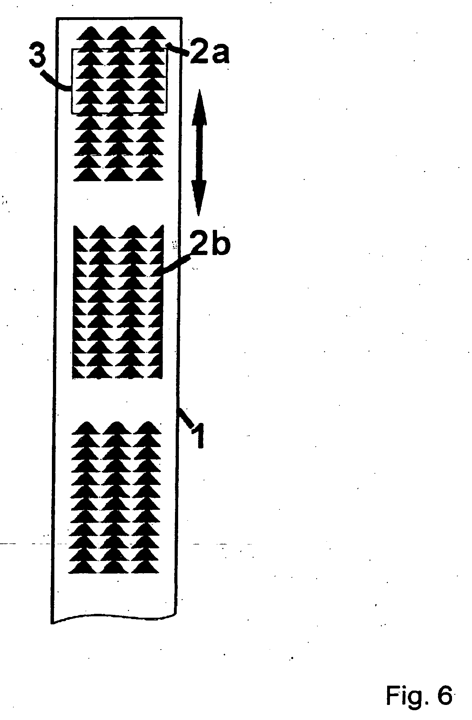

- Figur 6 -: Draufsicht auf eine lineare Ausführungsform des Trägers mit mehreren seitlich verschoben angeordneten Projektionsmustern;

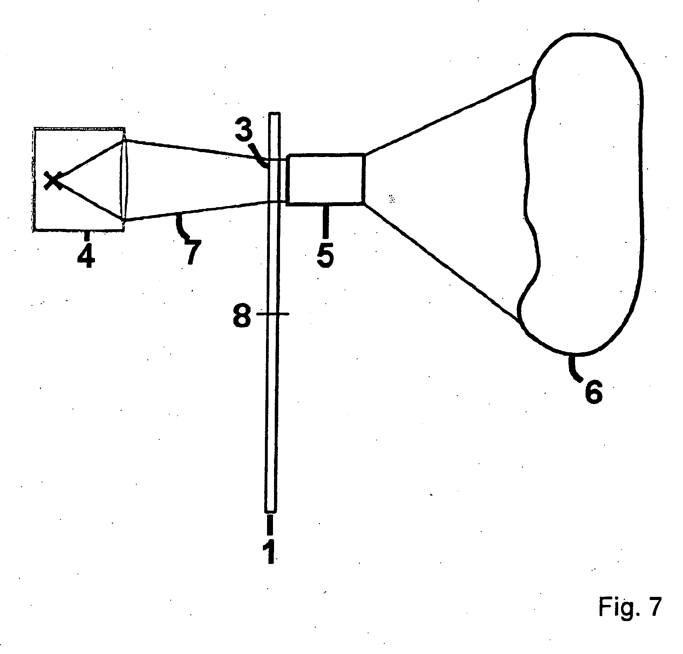

- Figur 7 -: Seitenansicht einer Ausführungsform der erfindungsgemäßen Projektionseinheit mit rotierender Trägerbewegung.

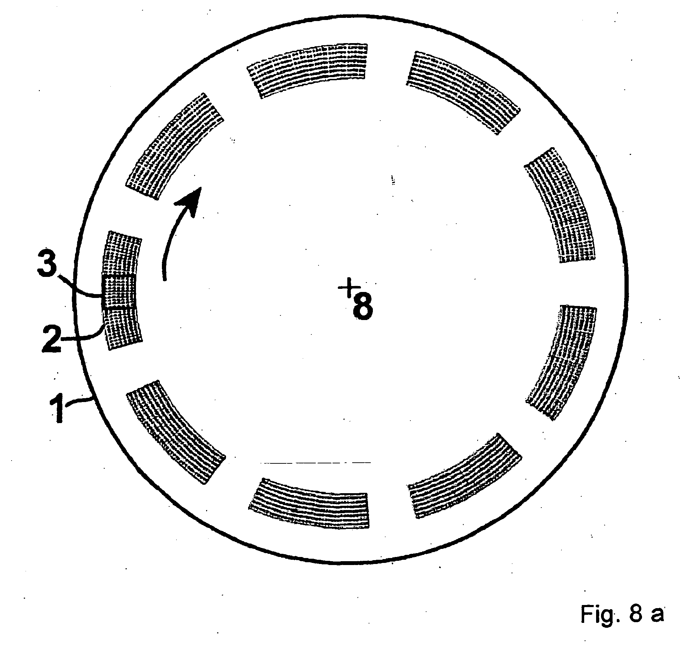

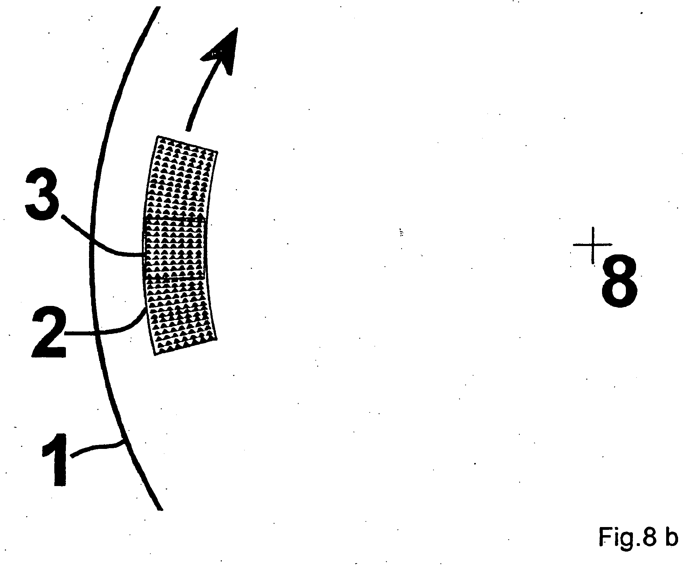

- Figur 8 a -: Draufsicht auf eine runde Ausführungsform des Trägers mit mehreren Projektionsmustern;
- Figur 8 b -: Vergrößerter Ausschnitt der Draufsicht aus Figur 8 a.

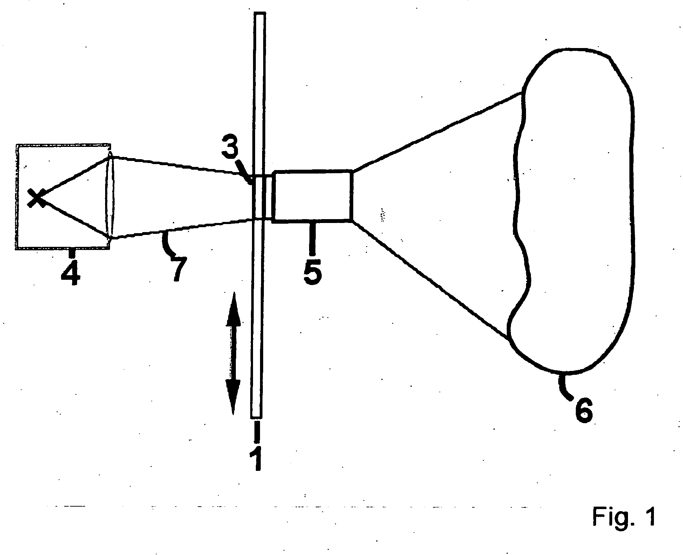

Die Figur 1 lässt eine Ausführungsform des Projektors in der Seitenansicht erkennen. Der Projektor hat einen linear beweglich in dem Projektor angeordneten Träger 1 mit einem Projektionsmuster 2 auf seiner Oberfläche. In dem Projektor ist ein Projektionsfenster 3 angrenzend an den Träger 1 vorgesehen, um einen Teilbereich des Projektionsmusters 2 bei an dem Projektionsfenster 3 vorbeibewegtem Träger 1 anzustrahlen. Hierzu ist eine Beleuchtungseinheit 4 mit einer vorgesetzten Linsenanordnung 5 so auf das Projektionsfenster 3 und ein Objekt 6 ausgerichtet, dass der Teilbereich des Projektionsmusters 2 auf das Objekt 6 projiziert wird. Das Projektionsfenster 3 für einen Teilbereich des Projektionsmusters 2 befindet sich somit im Strahlengang 7 zwischen der Beleuchtungseinheit 4 und dem Objekt 6. Die Linsenanordnung 5 ist dabei zur Auffächerung der Projektionsstrahlen auf das Objekt 6 vorgesehen. Das Bild des Objektes 6 mit dem aufprojizierten Projektionsmuster 2 wird von einer Beobachtungskamera aufgenommen und in bekannter Weise rechnergestützt ausgewertet. Das Auswerteverfahren selbst ist nicht Gegenstand der Erfindung und wird, da topometrische Messverfahren hinreichend bekannt sind, im Folgenden nicht näher erläutert.

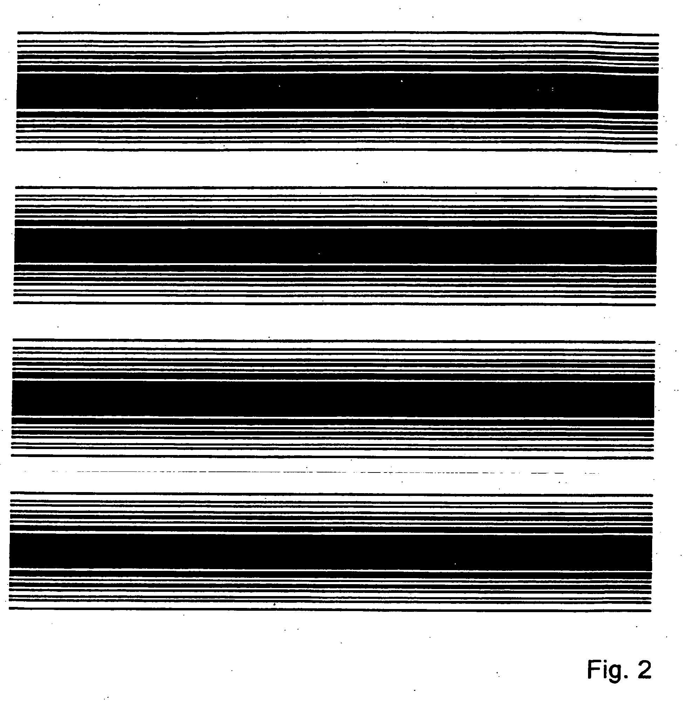

Die Figur 2 zeigt schematisch die Erzeugung eines sinusförmigen Helligkeitsverlaufs mit Hilfe des bekannten Dittering-Verfahrens. Bei diesem Verfahren setzen sich die einzelnen Projektionslinien des Projektionsmusters jeweils wiederum aus feinen Linien zusammen, deren Dicken und Abstände so gewählt sind, dass sich bei der Projektion z.B. ein sinusförmiger Helligkeitsverlauf ergibt.

Die Figur 3 a verdeutlicht ein beispielhaftes auf einen Träger aufgebrachtes Projektionsmuster 2. Es sind eine Vielzahl von dunkel eingefärbten Sinus-Vollwellen erkennbar, die untereinander angeordnet sind. Der obere Bereich über der Sinuskurve ist hingegen transparent.

Wie in der Figur 3b skizziert ist, entsteht bei einer Bewegung des Trägers 1 während der Belichtung durch den Projektor auf dem Objekt 6 eine Streifenstrüktur.

Die Figur 4 zeigt eine Auswahl möglicher Strukturen für die Projektionsmuster 2, die nach Bedarf einzeln oder in Kombination genutzt werden können. Analog zu dem in Figur 3 a gezeigten Beispiel für dunkel eingefärbte Sinus-Vollwellen, wird bei allen Varianten a) bis h) der Projektionsmuster 2, auf dem Träger 1 eine Vielzahl der entsprechenden Musterverläufe untereinander aufgebracht.

Beispielhaft ist in der Figur 4 eine Auswahl von denkbaren Einzetstrukturen gezeigt, und zwar:
a) gefüllte Sinus-Vollwellen
b) gefüllte Gaußglocken
c) gefüllte Parabeln
d) gefüllte Zacken
e) gefüllte Kreise
f) gefüllte Ellipsen
g) gefüllte Rauten
h) gefüllte Dreiecke

Die Figur 5 lässt eine Ausführungsform eines Trägers 1 für die Linearverschiebung im Projektor in der Draufsicht erkennen. Untereinander sind als Projektionsmuster 2 beispielsweise eine Vielzahl von integrierten Sinuskurven aufgetragen. Durch eine Verschiebung des Trägers 1 während der Belichtungsphase werden die auf das Objekt 6 projizierten Projektionsmuster 2 so unscharf, dass im Bild Streifen sichtbar werden. Deshalb muss dass Projektionsmuster 2 größer als das Projektionsfenster 3 ausgeführt sein.

Die Figur 6 lässt eine andere Ausführungsform eines Trägers 1 für die Linearverschiebung im Projektor in der Draufsicht erkennen. Bei der Verschiebung des Trägers 1 werden nacheinander verschiedene Teilbereiche des Projektionsmusters 2a in das Projektionsfenster 3 gebracht. Bei andauernder Verschiebung werden nach einiger Zeit verschiedene Teilbereiche eines weiteren Projektionsmusters 2b in das Projektionsfenster 3 gebracht. Das Projektionsmuster 2b ist dabei derart gestaltet, dass sich bei der Projektion eine zur Projektion des Projektionsmusters 2a entsprechend des gewählten topometrischen Messverfahrens abgestimmte verschobene Streifenstruktur ergibt.

Die Figur 7 lässt eine Ausführungsform des Projektors mit rundem Träger 1, d.h. einer Scheibe, in der Seitenansicht erkennen. Es wird deutlich, dass der Träger 1 um die Drehachse 8 rotierbar im Strahlengang 7 zwischen der Beleuchtungseinheit 4 und der Linsenanordnung 5 angeordnet ist. Wiederum wird der Projektor so ausgerichtet, dass ein Teilbereich des Projektionsmusters 2 auf ein Objekt 6 projiziert wird. Durch die Rotationsbewegung der Scheibe durchlaufen eine Vielzahl von Einzelstrukturen des Projektionsmusters 2 das Projektionsfenster 3 und werden als streifenförmiges Muster mit einer gewünschten Bewegungsunschärfe auf dem Objekt 6 und in einem vom Objekt 6 aufgenommenen Bild abgebildet.

Die Figur 8 a lässt eine runde Ausführungsform des Trägers 1, d.h. eine Scheibe in der Draufsicht erkennen. Auf einer Kreisbahn sind eine Vielzahl von Projektionsmustern 2 auf der Scheibe 1 angeordnet. Bei der Rotation der Scheibe um eine Drehachse 8 der Scheibe werden die Projektionsmuster 2 nacheinander in ein Beobachtungsfenster 3 in den Strahlengang 7 zwischen einer Beleuchtungseinheit 4 und einem Objekt 6 gebracht. Die Einzelstrukturen der Projektionsmuster 2 liegen auf Kreisbahnen, deren Mittelpunkt im Drehpunkt 8 der Scheibe liegen sollte.

Die Figur 8b stellt einen Teilbereich der Figur 8 a vergrößert dar. Dabei ist das Projektionsfenster 3 mit dem bei Rotationsbewegung unter dem Projektionsfenster 3 hindurchbewegtem Projektionsmuster 2 auf dem Träger 1 gut erkennbar.

## Patentansprüche

1. Projektor für eine Anordnung zum dreidimensionalen optischen Vermessen von Objekten (6) mit einem topometrischen Messverfahren, bei dem Bilder von auf ein Objekt (6) projizierten Projektionsmustern (2) aufgenommen und ausgewertet werden, wobei der Projektor eine Beleuchfungseinheit (4) und einen mit Projektionsmustern (2) versehenen Träger (1) zur Projektion der Lichtstrukturen hat, **dadurch gekennzeichnet, dass** auf dem Träger (1) Projektionsmuster (2) in Form sich wiederholender geometrischer Einzelstrukturen angeordnet sind, und der Träger (1) mit den Projektionsmustern (2) derart beweglich angeordnet ist, dass während der Bewegung und Beleuchtung ausgewählte Bereiche des Projektionsmusters (2) in den Strahlengang (7) zwischen Beleuchtungseinheit (4) und Objekt (6) verschoben werden und auf dem Objekt (6) durch die Bewegungsunschärfe ein streifenförmiges Muster abgebildet wird.

2. Projektor nach Anspruche 1, **dadurch gekennzeichnet, dass** der Träger (1) derart konstruiert list, dass eine lineare Verschiebung des Trägers (1) erfolgt.

3. Projektor nach Anspruche 1, **dadurch gekennzeichnet, dass** der Träger (1) derart konstruiert ist, dass eine Rotationsbewegung des Trägers (1) erfolgt.

4. Projektor nach einem der Ansprüche 1 bis 3, **dadurch gekennzeichnet, dass** sich auf dem Träger (1) mehrere Projektionsmuster (2) befinden, die derart angeordnet sind, dass sich für das gewählte Messverfähren erforderliche verschobene Streifen, insbesondere Streifen mit definierten Streifendicken und Streifenabständen, ergeben.

5. Projektor nach einem der vorhergehenden Ansprüche, **gekennzeichnet durch** Markierungen auf dem Träger (1) zur Triggerung der Beleuchtungseinheit (4) und/oder mindestens einer Beobachtungskamera so, dass eine Beleuchtung und/oder Aufnahme erfolgt, wenn ein einer Markierung zugeordnetes Projektionsmüster (2) in dem Strahlengang (7) zwischen Beleuchtungseinheit (4) und Objekt (6) ausgerichtet ist.

6. Projektor nach einem der vorhergehenden Ansprüche, **gekennzeichnet durch** einen mit dem Bewegungsmotor des Projektionsträgere (1) gekoppelten Encoder zur Triggerung der Beleuchtungseinheit (4) und/oder Beobachtungskamera so, dass eine Beleuchtung und/oder Aufnahme erfolgt, wenn das entsprechend Projektionsmuster (2) in dem Strahlengang (7) zwischen Beleuchtungseinheit (4) und Objekt (6) ausgerichtet ist.

7. Projektor nach einem der vorhergehenden Ansprüche, **dadurch gekennzeichnet, dass** die Bewegung des Trägers (1) kontinuierlich erfolgt.

8. Projektor nach einem der vorhergehenden Ansprüche, **dadurch gekennzeichnet, dass** die Projektionsmuster (2) eine Vielzahl sinusförmiger Kurvenverläufe mit dunkel eingefärbten Flächen unterhalb der Sinusbögen aufweisen.

9. Projektor nach einem der vorhergehenden Ansprüche, **dadurch gekennzeichnet, dass** die Projektionsmuster (2) eine Vielzahl gaußförmiger Kurvenverläufe mit dunkel eingefärbten Flächen unterhalb der Gaußglocken aufweisen.

10. Projektor nach einem der vorhergehenden Ansprüche, **dadurch gekennzeichnet, dass** die Projektionsmuster (2) eine Vielzahl parabelartiger Kurvenverläufe mit dunkel eingefärbten Flächen unterhalb der Parabelstücke aufweisen.

11. Projektor nach einem der vorhergehenden Ansprüche, **dadurch gekennzeichnet, dass** die Projektionsmuster (2) eine Vielzahl zackenförmiger Kurvenverläufe mit dunkel eingefärbten Flächen unterhalb der Zacken aufweisen.

12. Projektor nach einem der vorhergehenden Ansprüche, **dadurch gekennzeichnet, dass** die Projektionsmuster (2) eine Vielzahl gefüllter aneinander gereihter Kreise aufweisen.

13. Projektor nach einem der vorhergehenden Ansprüche, **dadurch gekennzeichnet, dass** die Projektionsmuster (2) eine Vielzahl gefüllter aneinander gereihter Ellipsen aufweisen.

14. Projektor nach einem der vorhergehenden Ansprüche, **dadurch gekennzeichnet, dass** die Projektionsmuster (2) eine Vielzahl gefüllter aneinander gereihter Rauten aufweisen.

15. Projektor nach einem der vorhergehenden Ansprüche, **dadurch gekennzeichnet, dass** die Projektionsmuster (2) eine Vielzahl gefüllte aneinander gereihter Dreiecke aufweisen.

16. Projektor nach einem der vorhergehenden Ansprüche, **dadurch gekennzeichnet, dass** die Projektionsmuster (2) eine Vielzahl gefüllter aneinander gereihter Vielecke aufweisen.

## Claims

1. Projector for an arrangement for three-dimensional optical measurement of objects (6) with the aid of a topometric measuring method in which images of projection patterns (2) projected onto an object (6) are acquired and evaluated, the projector having an illumination unit (4) and a carrier (1), provided with projection patterns (2), for projecting the light structures, **characterised in that** projection patterns (2) are arranged on the carrier (1) in the form of repeating geometrical individual structures, and the carrier (1) with the projection patterns (2) is movably arranged in such a way that during the movement and illumination selected regions of the projection pattern (2) are displaced into the beam path (7) between the illumination unit (4) and object (6), and a strip-shaped pattern is imaged on the object (6) by means of the movement unsharpness.

2. Projector according to Claim 1, **characterized in that** the carrier (1) is constructed in such a way that a linear displacement of the carrier (1) ensues.

3. Projector according to Claim 1, **characterized in that** the carrier (1) is constructed in such a way that a rotational movement of the carrier (1) ensues.

4. Projector according to one of Claims 1 to 3, **characterized in that** located on the carrier (1) are a number of projection patterns (2) which are arranged in such a way as to yield displaced strips required for the selected measuring method, in particular strips with defined stripe thicknesses and stripe spaces.

5. Projector according to one of the preceding claims, **characterized by** markings on the carrier (1) for triggering the illumination unit (4) and/or at least one observation camera such that illumination and/or acquisition ensues when a projection pattern (2) assigned to a marking is aligned in the beam path (7) between the illumination unit (4) and object (6).

6. Projector according to one of the preceding claims, **characterized by** an encoder, coupled to the movement motor of the projection carrier (1), for triggering the illumination unit (4) and/or observation camera such that illumination and/or acquisition ensues when the corresponding projection pattern (2) is aligned in the beam path (7) between the illumination unit (4) and object (6).

7. Projector according to one of the preceding claims, **characterized in that** the movement of the carrier (1) ensues continuously.

8. Projector according to one of the preceding claims, **characterized in that** the projection patterns (2) exhibit a multiplicity of sinusoidal curved shapes with dark colored areas below the sinusoidal arcs.

9. Projector according to one of the preceding claims, **characterized in that** the projection patterns (2) exhibit a multiplicity of Gaussian curved shapes with dark colored areas below the Gaussian bell.

10. Projector according to one of the preceding claims, **characterized in that** the projection patterns (2) exhibit a multiplicity of parabola-like curved shapes with dark colored areas below the parabolic segments.

11. Projector according to one of the preceding claims, **characterized in that** the projection patterns (2) exhibit a multiplicity of spiked curved shapes with dark colored areas below the spikes.

12. Projector according to one of the preceding claims, **characterized in that** the projection patterns (2) exhibit a multiplicity of filled circles lined up juxtaposed.

13. Projector according to one of the preceding claims, **characterized in that** the projection patterns (2) exhibit a multiplicity of filled ellipses lined up juxtaposed.

14. Projector according to one of the preceding claims, **characterized in that** the projection patterns (2) exhibit a multiplicity of filled rhomboids lined up juxtaposed.

15. Projector according to one of the preceding claims, **characterized in that** the projection patterns (2) exhibit a multiplicity of filled triangles lined up juxtaposed.

16. Projector according to one of the preceding claims, **characterized in that** the projection patterns (2) exhibit a multiplicity of filled polygons lined up juxtaposed.

## Revendications

1. Projecteur pour un dispositif de mesure optique tridimensionnelle d'objets (6) à l'aide d'un procédé de mesure topométrique, au cours duquel on acquiert et on exploite des images de motifs de projection (2) projetés sur un objet (6), le projecteur ayant une unité d'éclairage (4) et un support (1) muni de motifs de projection (2) pour la projection des structures lumineuses, **caractérisé en ce que** des motifs de projection (2) sont agencés sur le support (1) sous la forme de structures individuelles géométriques répétitives, et le support (1) avec les motifs de projection (2) est agencé mobile de façon que pendant le mouvement et l'éclairage, on déplace des zones choisies du motif de projection (2) dans le trajet des rayons (7) entre l'unité d'éclairage (4) et l'objet (6), et on image un motif en forme de rayures sur l'objet par le flou de mouvement.

2. Projecteur selon la revendication 1, **caractérisé en ce que** le support (1) est construit de façon qu'il s'effectue un déplacement linéaire du support (1).

3. Projecteur selon la revendication 1, **caractérisé en ce que** le support (1) est construit de façon qu'il s'effectue un mouvement de rotation du support (1).

4. Projecteur selon l'une quelconque des revendications 1 à 3, **caractérisé en ce qu'**il y a sur le support (1) plusieurs motifs de projection (2), agencés de façon à produire des rayures déplacées requises, pour le procédé de mesure choisi, en particulier des rayures avec des largeurs de rayure et des intervalles entre rayures définis.

5. Projecteur selon l'une quelconque des revendications précédentes, **caractérisé par** des marquages sur le support (1) pour déclencher l'unité d'éclairage (4) et/ou au moins une caméra d'observation, de façon qu'un éclairage et/ou une prise de vue s'effectue lorsqu'un motif de projection (2) associé à un marquage est aligné dans le trajet des rayons (7) entre l'unité d'éclairage (4) et l'objet (6).

6. Projecteur selon l'une quelconque des revendications précédentes, **caractérisé par** un encodeur couplé au moteur de mouvement du support de projection (1) pour le déclenchement de l'unité d'éclairage (4) et/ou de la caméra d'observation, de façon qu'un éclairage et/ou une prise de vue s'effectue lorsque le motif de projection (2) correspondant est aligné dans le trajet des rayons (7) entre l'unité d'éclairage (4) et l'objet (6).

7. Projecteur selon l'une quelconque des revendications précédentes, **caractérisé en ce que** le mouvement du support (1) s'effectue en continu.

8. Projecteur selon l'une quelconque des revendications précédentes, **caractérisé en ce que** le motif de projection (2) présente plusieurs allures de courbe sinusoïdales avec des surfaces teintées en foncé sous les arcs de sinus.

9. Projecteur selon l'une quelconque des revendications précédentes, **caractérisé en ce que** les motifs de projection (2) présentent plusieurs allures de courbe en forme de gaussienne avec des surfaces teintées en foncé sous les cloches de Gauss.

10. Projecteur selon l'une quelconque des revendications précédentes, **caractérisé en ce que** les motifs de projection (2) présentent plusieurs allures de courbe du type parabolique avec des surfaces teintées en foncé sous les parties paraboliques.

11. Projecteur selon l'une quelconque des revendications précédentes, **caractérisé en ce que** les motifs de projection (2) présentent plusieurs allures de courbe en forme de dents avec des surfaces teintées en foncé sous les dents.

12. Projecteur selon l'une quelconque des revendications précédentes, **caractérisé en ce que** les motifs de projection (2) présentent plusieurs cercles pleins en rangée.

13. Projecteur selon l'une quelconque des revendications précédentes, **caractérisé en ce que** les motifs de projection (2) présentent plusieurs ellipses pleines en rangée.

14. Projecteur selon l'une quelconque des revendications précédentes, **caractérisé en ce que** les motifs de projection (2) présentent plusieurs losanges pleins en rangée.

15. Projecteur selon l'une quelconque des revendications précédentes, **caractérisé en ce que** les motifs de projection (2) présentent plusieurs triangles pleins en rangée.

16. Projecteur selon l'une quelconque des revendications précédentes, **caractérisé en ce que** les motifs de projection (2) présentent plusieurs polygones pleins en rangée.
